# EUROPEAN PATENT APPLICATION

(11) **EP 4 737 092 A1**
(43) Date of publication of application: **06.05.2026**
(21) Application number: 24209716.0
(22) Date of filing: 30.10.2024
(51) Int. Cl.: B29C 44/34, B29C 44/42, B29C 44/60

(54) **DUAL-INJECTION MOLDING SYSTEM**

(71) Applicant: Tien Kang Co., Ltd., Taichung City 412 (TW)
(72) Inventor: Huang, Fong-Wu, 412 Taichung City (TW)
(74) Representative: Cabinet Chaillot

(57) **Abstract**

A dual-injection molding system (3) mainly includes a control device (34) disposed between a feeding device (31) and each injection device (32) . Each injection device (32) has an injection tube (321), an outlet gate (323), and a needle valve unit (324) disposed in the injection tube (321) . Each control device (34) has a control unit (341) and a stop unit (342). The stop unit (342) and the needle valve unit (324) are controlled by the control unit (341) . The feeding device (31) is adapted to obtain a mixture (C) by mixing a base material (A) with a supercritical fluid material (B) in a feeding tube (312). The stop unit (342) is actuated to regulate a communicating state between the feeding device (31) and each injection tube (321), and the needle valve unit (324) is actuated to adjust an open area at each outlet gate (323), thereby controlling a feeding quantity and an injection quantity of the mixture (C), preventing the unequal injection of the mixture (C), and increasing the injection forming quality and the yield rate.

## Description

### BACKGROUND OF THE INVENTION

### 1. Field of the Invention

This invention relates to an injection molding system and relates particularly to a dual-injection molding system.

### 2. Description of the Related Art

Dual - injection molding technology is a technology that is mature and commonly in use. The dual-injection molding technology is capable of manufacturing a single object through combining two different materials to thereby provide plastic products with multiple colors, materials or textures. The technology facilitates the production of complex products or products with multi - functions. In addition, the technology can be adapted to simultaneously manufacture two single objects to thereby increase the processing efficiency. The dual-injection molding technology also facilitates reduction in the processing procedures, in the subsequent assembling time and costs, and in the scrap rate when comparing with the single-injection molding technology, thereby improving the production efficiency and economic benefits. Therefore, the dual- injection molding technology is widely used in various fields , such as electronic products, automotive accessories, medical equipment, sports equipment, and different daily necessities.

A conventional dual-injection molding system comprises two injection devices, a feeding device and a mold device respectively connected to the injection devices. The feeding device includes a feeding tube, a first supply unit and a second supply unit respectively connected to the feeding tube, and a feeding screw installed in the feeding tube. Each injection device includes an injection tube and a pressing unit installed in the injection tube. The injection tube is provided with an inlet gate and an outlet gate. The mold device includes a first mold and a second mold positioned in opposing relationship, and a pushing unit connected to the second mold. The first mold is connected to the outlet gate of each injection device. When the second mold is pushed by the pushing unit to be engaged with the first mold, a cavity is formed and defined.

During an operation of the dual- injection molding system, a base material stored in the first supply unit is delivered into the feeding tube. Simultaneously, a foaming agent is also delivered from the second supply unit into the feeding tube. The base material and the foaming agent are stirred under a rotation of the feeding screw to provide a mixture. The mixture is then delivered into the injection tube of each injection device from the feeding tube. Meanwhile, the second mold is pushed by the pushing unit to thereby achieve a tight engagement between the second mold and the first mold and enclose the cavity. Afterward the mixture is pressed and injected to the cavity by the pressing unit to thereby form an object.

In order to deliver the mixture into each injection device smoothly, a plurality of thread convolutions are spirally disposed on a surface of the feeding screw in a continuously spiral extension. However, from a front view of the feeding screw, the left side and the right side of the same thread convolution locate at different positions. The left side and the right side of the thread convolution will carry different quantities of the mixture. Accordingly, the injection devices receive different quantities of the mixture, and that results in the unequal injection of the mixture. Hence, the yield rate of the production is reduced caused by the unequal injection of the mixture. Meanwhile, a channel connected between the mold device and each injection device is extended in a non- linear manner, and that will result in pressure change of the mixture when the mixture is injected from the injection device to the mold device. Thus, the injection forming quality is unstable because the mixture cannot enter into the cavity evenly, and that requires to be improved.

### SUMMARY OF THE INVENTION

The object of this invention is to provide a dual-injection molding system capable of precisely controlling a feeding operation and an injection operation of mixture, effectively preventing the unequal injection, and increasing the injection forming quality and the yield rate.

The dual-injection molding system of this invention comprises a feeding device and a mold device, two independent injection devices connected between the feeding device and the mold device, and two control devices. Each control device is installed between the feeding device and one of the injection devices. The feeding device has a first supply unit adapted to supply a base material, a second supply unit adapted to supply a supercritical fluid material, a feeding tube connected to the first supply unit and the second supply unit respectively, and a feeding screw set within the feeding tube. Each injection device has an injection tube and a needle valve unit set within the injection tube. The injection tube is arranged in a linear manner and formed with an inlet gate and an outlet gate. Each control device has a control unit and a stop unit. Hence, after the base material and the supercritical fluid material are well-mixed in the feeding tube and stirred by the feeding screw to become a mixture, the stop unit is actuated by the control unit to allow the feeding tube to communicate with the injection tube so that the mixture is delivered from the feeding tube into the injection tube. After the injection tube is filled with enough mixture, the needle valve unit is moved to adjust an injection quantity of the mixture which is injected from the outlet gate, thereby subjecting the mixture to a feeding operation and an injection operation under a movement of the needle valve unit and an extending/retracting operation of the stop unit respectively, preventing the unequal injection of the mixture, and increasing the injection forming quality and the yield rate of the production.

Preferably, the control device has a measuring unit linked with the control unit.

Preferably, the mold device is connected to a supply-exhaust device, thereby ensuring constant pressure in the cavity and allowing the mixture to stably foam in the cavity.

### BRIEF DESCRIPTION OF THE DRAWINGS

Fig. **1** is a schematic view showing a first preferred embodiment of this invention;
Fig. **2** is a top view showing that the stop units are shortened to allow the mixture to be delivered from the feeding device into each injection device;
Fig. **3** is an end view showing that the feeding device communicates with the injection devices;
Fig. **4** is a top view showing that the stop units are extended to stop the delivery of the mixture;
Fig. **5** is an end view showing that the feeding device stops communicating with the injection device;
Fig. **6** is a front view showing that the injection devices are filled with the mixture;
Fig. **7** is a front view showing that the mixture is injected from the injection devices to the mold device; and
Fig. **8** is a front view showing that the injection operation of the mixture is completed.

### DETAILED DESCRIPTION OF THE PREFERRED EMBODIMENTS

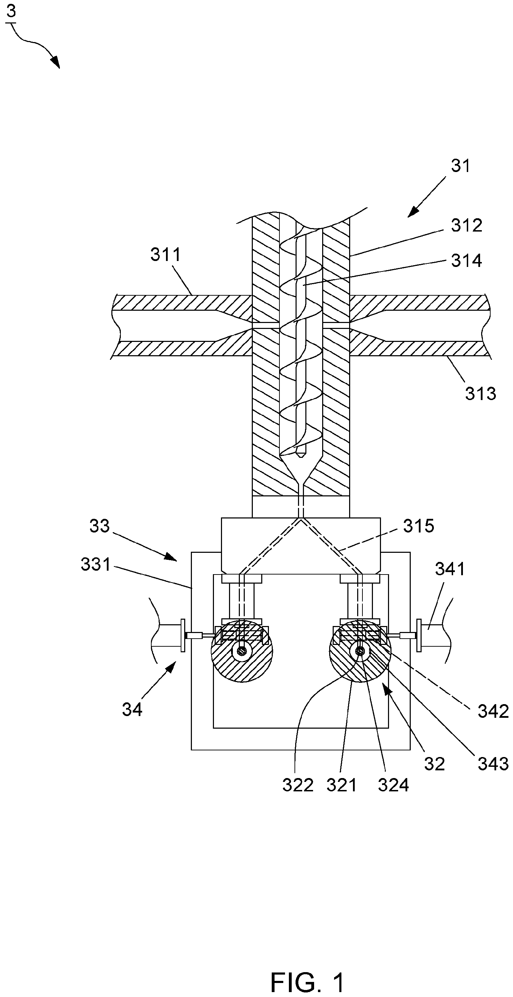

Referring to Figs. **1****,** **2** and **6****,** a first preferred embodiment of a dual-injection molding system **3** of this invention is disclosed. The dual-injection molding system **3** comprises a feeding device **31,** two injection devices **32** connected to the feeding device **31** respectively, a mold device **33** connected to the injection devices **32,** and two control devices **34.** Each injection device **32** operates independently. One control device **34** is arranged between the feeding device **31** and one injection device **32.** Another control device **34** is arranged between the feeding device **31** and another injection device **32.** The mold device **33** is connected to a supply- exhaust device **35.** The feeding device **31** has a first supply unit **311** adapted to supply a base material **A,** a feeding tube **312** connected to the first supply unit **311,** a second supply unit **313** connected to the feeding tube **312,** and a feeding screw **314** positioned within the feeding tube **312.** A feeding channel **315** is connected between the feeding tube **312** and each injection device **32.** The second supply unit **313** is adapted to deliver a supercritical fluid material **B** into the feeding tube **312.** The supercritical fluid material **B** is used as a physical foaming agent.

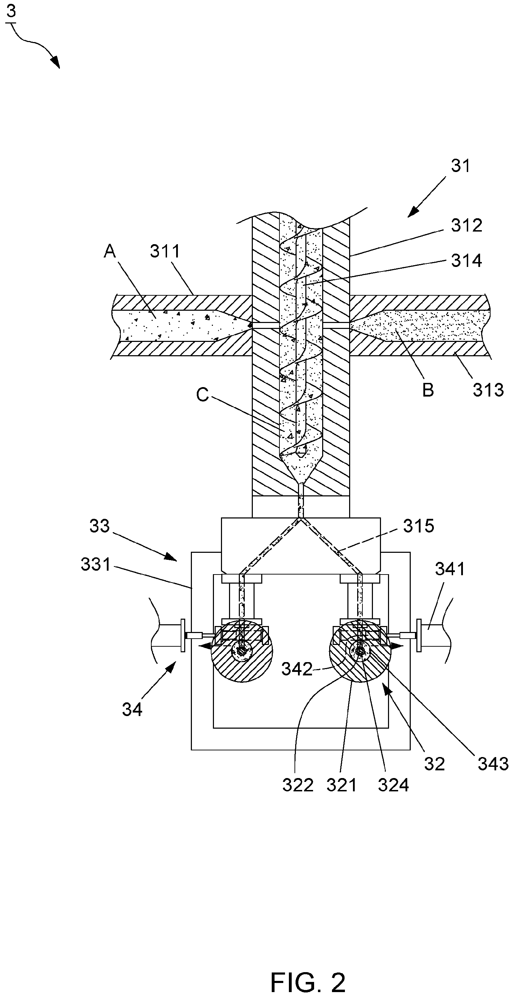

Referring to Figs. **2****,** **3** and **6****,** each injection device **32** has a hollow injection tube **321,** an inlet gate **322** connected to the feeding channel **315,** an outlet gate **323** formed on the injection tube **321,** and a needle valve unit **324** positioned within the injection tube **321.** The injection tube **321** is extended in a linear manner. The term "linear" can be interpreted as "along a straight line" or "nearly straight line". The mold device **33** has a first mold **331** connected to the outlet gate **323** of each injection device **32,** a second mold **332** situated in opposing relationship to the first mold **331,** and a pushing unit **333** connected to the second mold **332.** The pushing unit **333** is capable of pushing the second mold **332** toward the first mold **331** so that the second mold **332** is engaged with the first mold **331** tightly to form a cavity **334.** Here takes an example that the mold device **33** has two cavities **334.** The cavities **334** are separated from each other. Each cavity **334** has a shoe shape.

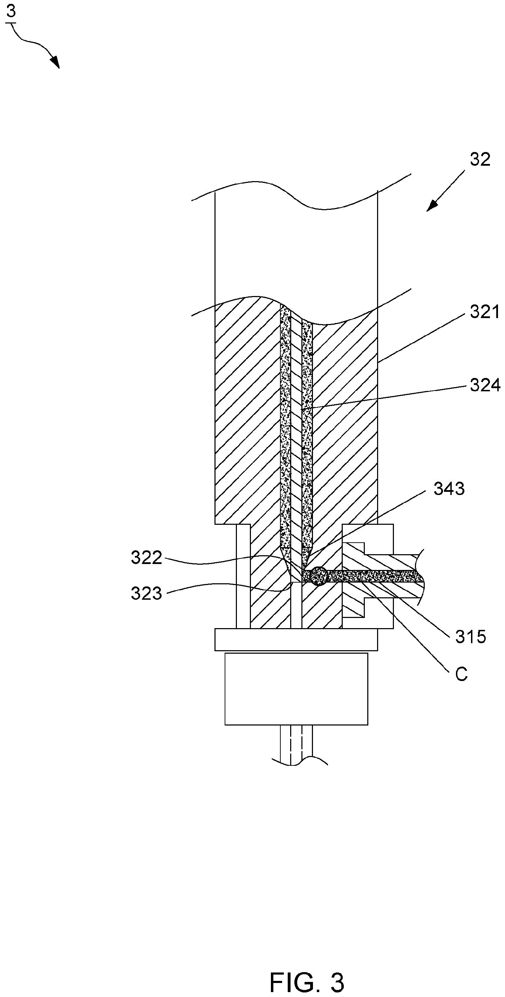

Referring to Figs. **2** and **3****,** each control device **34** has a control unit **341,** a stop unit **342** and a measuring unit **343** controlled by the control unit **341** respectively. The stop unit **342** is disposed between the inlet gate **322** of the injection device **32** and the feeding channel **315** relative to the injection device **32.** In this preferred embodiment, the stop unit **342** is driven by the control unit **341** to attain an extending operation or a retracting operation, thereby adjusting a communicating state between the feeding tube **312** and the injection tube **321.** The measuring unit **343** is disposed in the injection tube **321** and linked with the control unit **341,** thereby metering a feeding quantity and an injection quantity of a mixture **C** which is the combination of the base material **A** and the supercritical fluid material **B.** Information about the required feeding quantity and the required injection quantity is stored in the control unit **341** in advance. A movement of the needle valve unit **324** is also driven by the control unit **341,** thereby adjusting an open area at each outlet gate **323.**

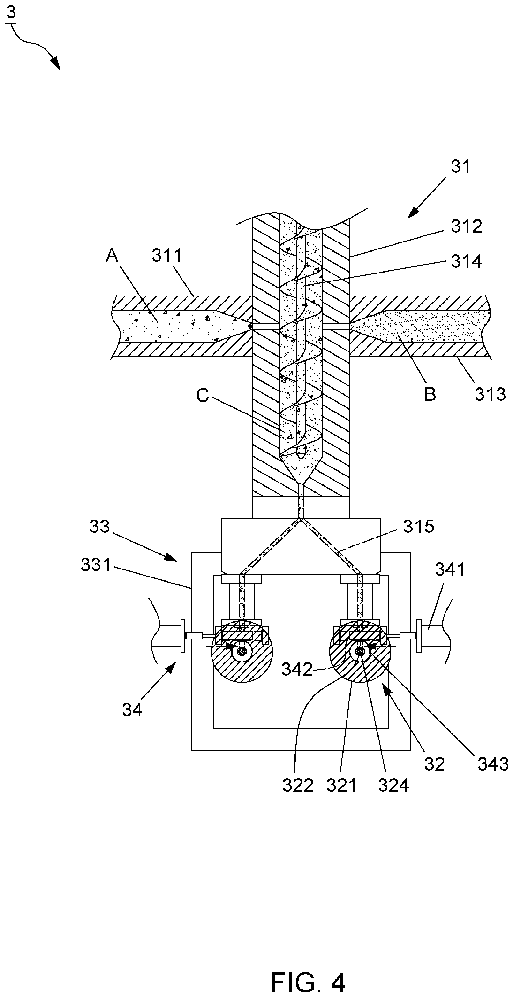

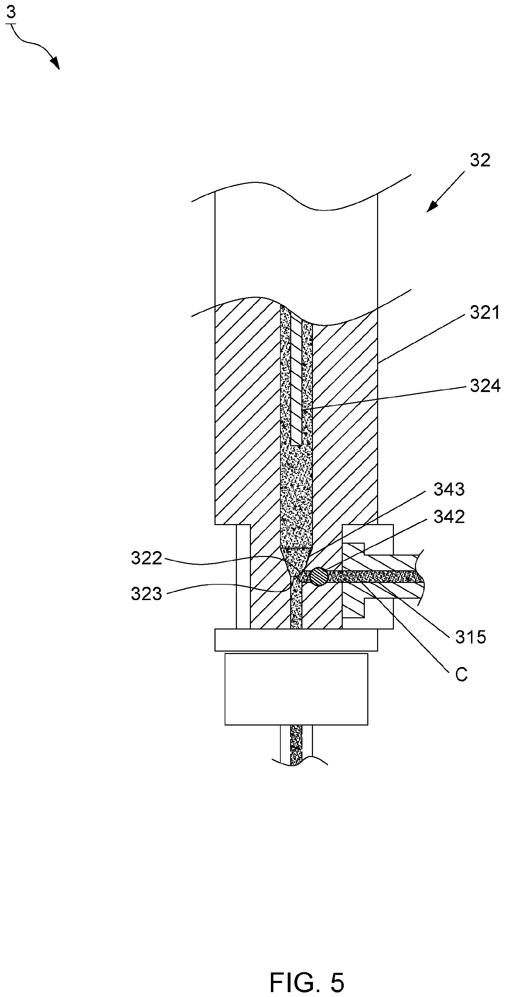

Referring to Figs. **2****,** **3** and **6****,** during an operation of the dual-injection molding system **3,** the base material **A** is delivered from the first supply unit **311** into the feeding tube 312. At the same time, the supercritical fluid material **B** is delivered from the second supply unit **313** into the feeding tube **312.** During the rotation of the feeding screw **314,** the base material **A** and the supercritical fluid material **B** are stirred and blended uniformly in the feeding tube **312** to become the mixture **C.** The mixture **C** is then moved by the feeding screw **314** toward the feeding channels **315.** The stop unit **342** is shortened under the control of the control unit **341** to allow the feeding tube **312** to communicate with the injection tube **321.** Thus, the mixture C enters into the injection tube **321** from the inlet gate **322.** Simultaneously, the needle valve unit **324** is moved to close the outlet gate **323** under the control of the control unit **341.** The measuring unit **343** detects the feeding quantity of the mixture C which is delivered into the injection tube **321.** The information of the feeding quantity of the mixture C is synchronously sent to the control unit **341** by the measuring unit **343.** Referring to Figs. **4** and **5****,** after the injection tube **321** is filled with enough mixture **C,** namely the information of the feeding quantity of the mixture **C** meets the requirements, the stop unit **342** is extended under the control of the control unit **341** to disconnect the feeding tube **312** from the injection tube **321.** Thus, the feeding operation of the mixture **C** is completed.

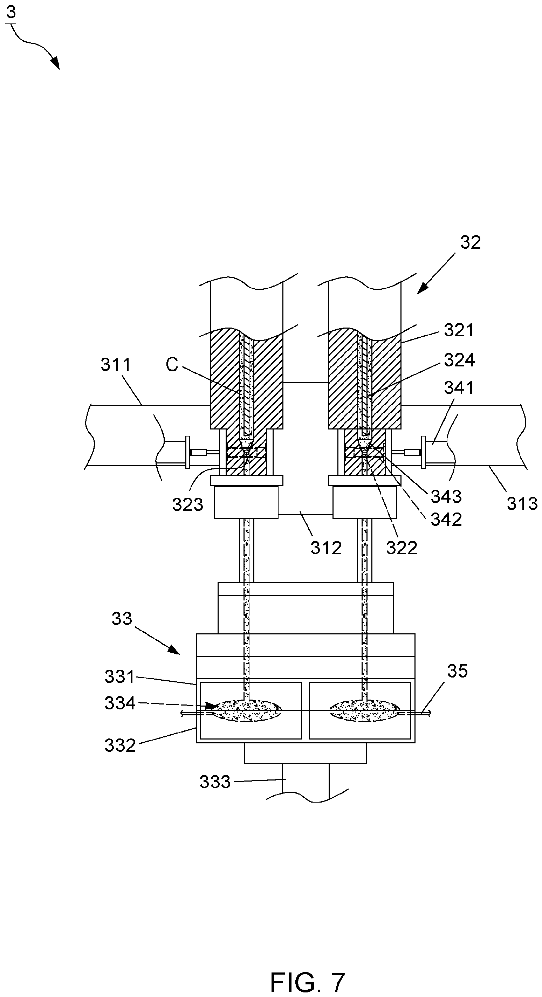

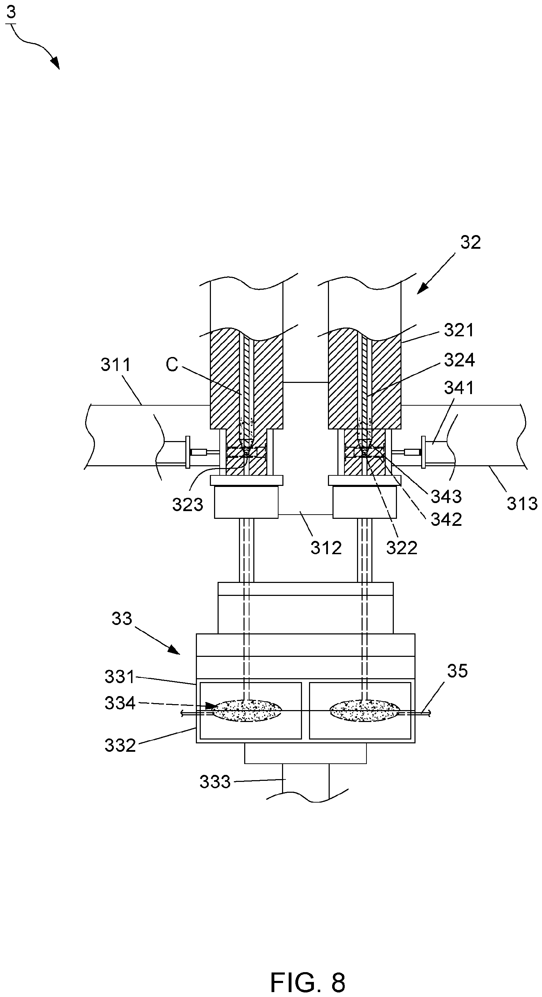

Referring to Figs. **4** and **7****,** the pushing unit **333** pushes the second mold **332** toward the first mold **331** so that the second mold **332** is engaged with the first mold **331** tightly to form the cavity **334.** The needle valve unit **324** is moved to leave the outlet gate **323** under the control of the control unit **341,** and the outlet gate **323** is opened accordingly. After that, the mixture C is straightly injected to the cavity **334** from the outlet gate **323,** thereby preventing the mixture **C** from being hindered and remaining consistent in the pressure during the injection operation. Further, the measuring unit **343** detects the injection quantity of the mixture **C** which is injected to the cavity **334.** The information of the injection quantity of the mixture **C** is synchronously sent to the control unit **341** by the measuring unit **343.** Referring to Fig. **8****,** after the cavity **334** is filled with enough mixture **C,** namely the information of the injection quantity of the mixture **C** meets the requirements, the needle valve unit **324** is moved under the control of the control unit **341** to seal the outlet gate **323.** Thus, the injection operation of the mixture **C** is completed. Because the open area of each outlet gate **323** is adjusted through the movement of the needle valve unit **324** under the control of the control unit **341,** the injection quantity and the injection speed of the mixture **C** are precisely controlled, thereby attaining equal and sufficient injection of the mixture **C.**

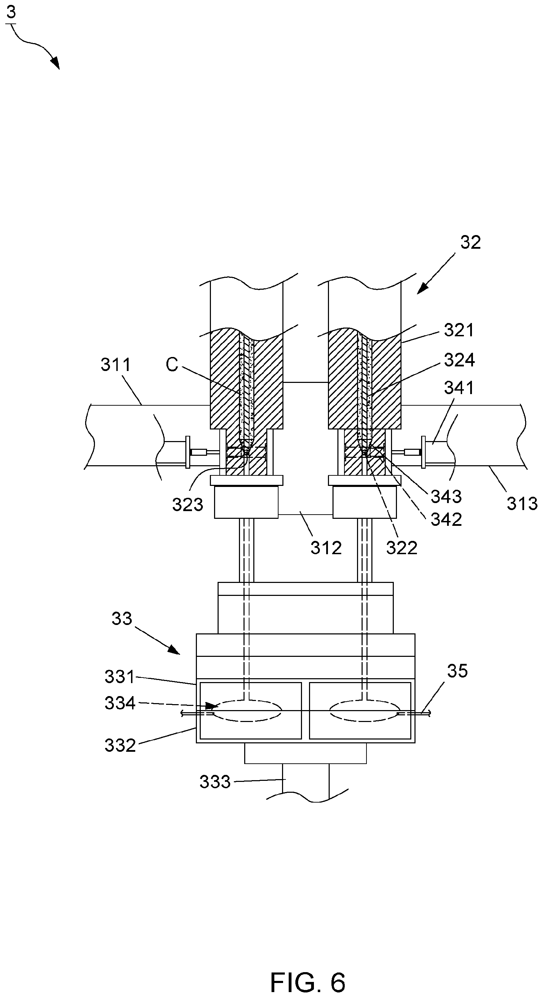

Referring to Figs. **6** and **7****,** the supply-exhaust device **35** is adapted to exhaust air in the cavities **334** to allow the mixture **C** to foam in respective cavities **334** stably and further form different objects (not shown), thereby effectively increasing the injection forming quality and the yield rate of the production. When the cavities **334** are not filled with any mixture C, the supply-exhaust device **35** will supply air to the cavities **334** to maintain the constant pressure in the cavities **334.** Certainly, the injection devices **32** can be filled with different mixtures **C.** Or, under the control of the control units **341,** the injection operation of the injection devices **32** are executed at different times, thereby improving the variability in use.

To sum up, the dual-injection molding system of this invention takes an advantage that the movement of the needle valve unit and the extending/retracting operation of the stop unit are respectively actuated by the control unit of the control device to adjust the communicating state between the injection tube and the feeding tube and to regulate the open area of the outlet gate, thereby accurately controlling and adjusting the feeding quantity and the injection quantity of the mixture, preventing the unequal injection of the mixture, and improving the injection forming quality and the yield rate of the production.

While the embodiments of this invention are shown and described, it is understood that further variations and modifications may be made without departing from the scope of this invention.

## Claims

1. A dual - injection molding system (3) comprising a feeding device (31), two injection devices (32) respectively connected to said feeding device (31), and a mold device (33) connected to said two injection devices (32), wherein said feeding device (31) includes a first supply unit (311) filled with a base material (A), a feeding tube (312) connected to said first supply unit (311), a second supply unit (313) connected to said feeding tube (312), and a feeding screw (314) disposed in said feeding tube (312), each of said two injection devices (32) including an injection tube (321), an inlet gate (322) formed on said injection tube (321), and an outlet gate (323) formed on said injection tube (321), said mold device (33) including a first mold (331) connected to said outlet gate (323) of each injection device (32), a second mold (332) disposed in opposing relationship to said first mold (331), and a pushing unit (333) connected to said second mold (332), a cavity (334) being defined when said first mold (331) and said second mold (332) are engaged together;
**characterized in that** a supercritical fluid material (B) is fed from said second supply unit (313) into said feeding tube (312) for being used as a physical foaming agent, said supercritical fluid material (B) and said base material (A) being mixed in said feeding tube (312) and stirred by said feeding screw (314) to become a mixture (C), a needle valve unit (324) being disposed in said injection tube (321) which is extended in a linear manner by which said mixture (C) is straightly injected to said cavity (334), and an injection quantity of said mixture (C) is controlled by moving said needle valve unit (324), a control device (34) being disposed between said feeding device (31) and each of said two injection devices (32), said control device (34) including a control unit (341) and a stop unit (342), a movement of said needle valve unit (324) and an extending/retracting operation of said stop unit (342) being respectively driven by said control unit (341), thereby subjecting said mixture (C) to a feeding operation and an injection operation under the control of said control unit (341) .

2. The system (3) according to claim 1, wherein said control device (34) includes a measuring unit (343) linked with said control unit (341) .

3. The system (3) according to claim 1, wherein said mold device (33) is connected to a supply-exhaust device (35), thereby maintaining constant pressure in said cavity (334) and allowing said mixture (C) to foam in said cavity (334) stably.
